# EUROPÄISCHE PATENTSCHRIFT

(11) **EP 3 013 615 B1**
(45) Veröffentlichungstag und Bekanntmachung des Hinweises auf die Patenterteilung: **21.02.2018**
(21) Anmeldenummer: 14733143.3
(22) Anmeldetag: 23.06.2014
(51) Int. Cl.: B60K 1/02, B60K 28/06, B60L 15/10, G05D 1/02, B60W 30/182, F16H 59/02, F16H 59/10, G05D 1/00

(54) **VORRICHTUNG UND VERFAHREN ZUM WAHLWEISEN BETREIBEN EINES KRAFTFAHRZEUGS IN EINEM BENUTZERGESTEUERTEN ODER EINEM AUTOMATISCHEN FAHRBETRIEBSMODUS**
DEVICE AND METHOD TO SELECTIVELY ACTUATE A VEHICLE ACCORDING TO AN USER OR AN AUTOMATIC DRIVING MODE
APPAREIL AND METHOD DE PILOTAGE SELECTIF D'UN VEHICULE SUR LA BASE D'UN MODE DE PILOTAGE MANUEL OU AUTOMATIQUE

(30) Priorität: 25.06.2013 DE 102013010630
(43) Veröffentlichungstag der Anmeldung: 04.05.2016
(73) Patentinhaber: Leopold Kostal GmbH & Co. KG, 58513 Lüdenscheid (DE)
(72) Erfinder: DREES, Roland, 59199 Bönen (DE); JANETZKO, Mario, 44139 Dortmund (DE)
(74) Vertreter: Kerkmann, Detlef
(86) Internationale Anmeldenummer: PCT/EP2014/063185
(87) Internationale Veröffentlichungsnummer: WO 2014/206943

(56) Entgegenhaltungen:
- WO-A1-2013/080886
- WO-A2-2012/061141
- DE-A1-102011 101 709
- US-A1- 2003 055 538
- US-A1- 2009 287 367

## Beschreibung

Die vorliegende Erfindung betrifft eine Vorrichtung und ein Verfahren zum wahlweisen Betreiben eines Kraftfahrzeugs in einem benutzergesteuerten oder in einem zumindest teilweise automatischen Fahrbetriebsmodus.

Zukünftige Automobile werden in zunehmendem Maße die Möglichkeit eines automatisierten Fahrens bieten. Automatisiertes Fahren bedeutet in diesem Zusammenhang, dass sowohl Quer- als auch Längsführung gleichzeitig vom Fahrzeug übernommen werden. In einer ersten Entwicklungsstufe, die zunächst einem teilweise automatisierten Fahren entspricht, muss der Fahrzeugführer die Handlungen des Systems permanent überwachen und in kritischen Situationen jederzeit eingreifen können. Um dies sicherzustellen, sind Einrichtungen vorgeschlagen worden, die zum Wechseln zwischen den Fahrbetriebsmodi und zum Überwachen der Aufmerksamkeit des Fahrers während eines automatischen Fahrbetriebsmodus dienen. Zunächst werden derartige Systeme nur in ausgewählten Fahr-Situationen einzusetzen sein, beispielsweise auf der Autobahn oder beim Einparken. Die Fahrzeuge müssen also in vielen Situationen nach wie vor auch manuell gefahren werden. Dazu werden weiterhin, wie bei einem herkömmlichen Automatik-Fahrzeug, ein Lenkrad sowie Beschleunigungs- und Bremspedale benötigt.

Die Offenlegungsschrift DE 10 2008 040 149 A1 zeigt eine Vorrichtung und ein Verfahren zur Freigabe einer automatischen Führung eines Fahrzeugs, bei der eine Überwachung der Aufmerksamkeit des Fahrers während eines automatischen Fahrbetriebsmodus mittels eines mehrere, innerhalb des Fahrzeugs angeordnete Kameras umfassenden Systems erfolgt.

Das Dokument US 2009/0287367 A1 offenbart eine Vorrichtung und ein Verfahren gemäß den Oberbergriffen der unabhängigen Patentansprüche 1 und 4. Als Einrichtung zum Überwachen der Aufmerksamkeit des Fahrers während eines automatischen Fahrbetriebsmodus ist in diesem Dokument beispielhaft eine Fahrerüberwachungskamera erwähnt.

Das Dokument US 2003/0055538 A1 offenbart ein Verfahren sowie eine Vorrichtung mit einer Handhabe zur Steuerung eines Fahrzeugs. Bei dem in diesem Dokument gezeigten Verfahren ist ein ausschließlich benutzergesteuerter Fahrbetriebsmodus vorgesehen. Die Handhabe dient hierbei zur Längs- und Querführung des Fahrzeugs in direkter Analogie zur Steuerung mittels eines Beschleunigungs- und eines Bremspedals zur Längsführung und eines Lenkrades zur Querführung des Fahrzeugs. Ein zumindest teilweise automatischer Fahrbetriebsmodus ist hierbei nicht vorgesehen.

Die erfindungsgemäß vorgeschlagene Vorrichtung sowie das erfindungsgemäße Verfahren ermöglichen es, mit deutlich geringerem Aufwand dennoch eine effektive Überwachung der Aufmerksamkeit des Fahrers während eines automatischen Fahrbetriebsmodus sowie einen gezielt gesteuerten Wechsel zwischen den Fahrbetriebsmodi sicherzustellen.

Dies wird hinsichtlich der Vorrichtung dadurch erreicht, dass das Bedienelement mit zumindest einem Berührungssensor versehen ist, dessen Ausgangssignal der Einrichtung zum Wechseln zwischen den Fahrbetriebsmodi und zum Überwachen der Aufmerksamkeit des Fahrers zugeordnet ist, und dass das Lenkrad des Fahrzeugs ebenfalls mit zumindest einem Berührungssensor versehen ist, dessen Ausgangssignal der Einrichtung zum Wechseln zwischen den Fahrbetriebsmodi und zum Überwachen der Aufmerksamkeit des Fahrers zugeordnet ist.

Bezüglich des Verfahrens gelingt dies erfindungsgemäß dadurch, dass die Überwachung der Aufmerksamkeit des Fahrers durch Auswertung des Ausgangssignals eines dem handbetätigbaren Bedienelement zugeordneten Berührungssensors erfolgt, dass das Ausgangssignal des dem handbetätigbaren Bedienelement zugeordneten Berührungssensors auch zum Wechseln zwischen den Fahrbetriebsmodi ausgewertet wird, und dass das Ausgangssignal eines dem Lenkrad zugeordneten Berührungssensors ebenfalls zum Wechseln zwischen den Fahrbetriebsmodi ausgewertet wird.

Das dem automatischen Fahrbetriebsmodus zugeordnete, handbetätigbare Bedienelement ermöglicht es dem Fahrer insbesondere auch während der automatischen Fahrt Einfluss auf das Verhalten des Fahrzeugs zu nehmen. So kann er dem Fahrzeug über dieses zusätzliche Bedienelement, das zum Beispiel durch einen in der Art eines als Computer-Bedienelement bekannten Joy-Stick ausgebildeten "Drive-Stick" in der Mittelkonsole des Fahrzeugs gebildet ist, von ihm gewünschte Fahrmanöver mitteilen. Mögliche Manöver sind beispielsweise "schneller fahren", "langsamer fahren", "Spur wechseln" oder "Rückwärts einparken".

Der Umschaltvorgang von manuellem zu automatischem Fahren und die Rückgabe der Fahraufgabe aus dem automatischen Fahrbetriebsmodus heraus an den Fahrer stellen einen ganz wesentlichen Aspekt beim Fahren eines Fahrzeugs mit (teil-)automatisierter Fahrfunktion dar. Diese Übergaben geschehen meist während der Fahrt und können sowohl vom Fahrer als auch vom Fahrzeug initiiert werden.

Vorteilhafte Ausgestaltungen und Weiterbildungen der erfindungsgemäßen Vorrichtung und des Verfahrens ergeben sich aus den jeweiligen Unteransprüchen und werden anhand der Zeichnung erläutert.

Es zeigen:
- Figur 1: Eine Prinzipskizze der erfindungsgemäßen Vorrichtung
- Figur 2: Eine schematische Darstellung einer Ausgestaltung des erfindungsgemäßen Verfahrens als Ablaufdiagramm

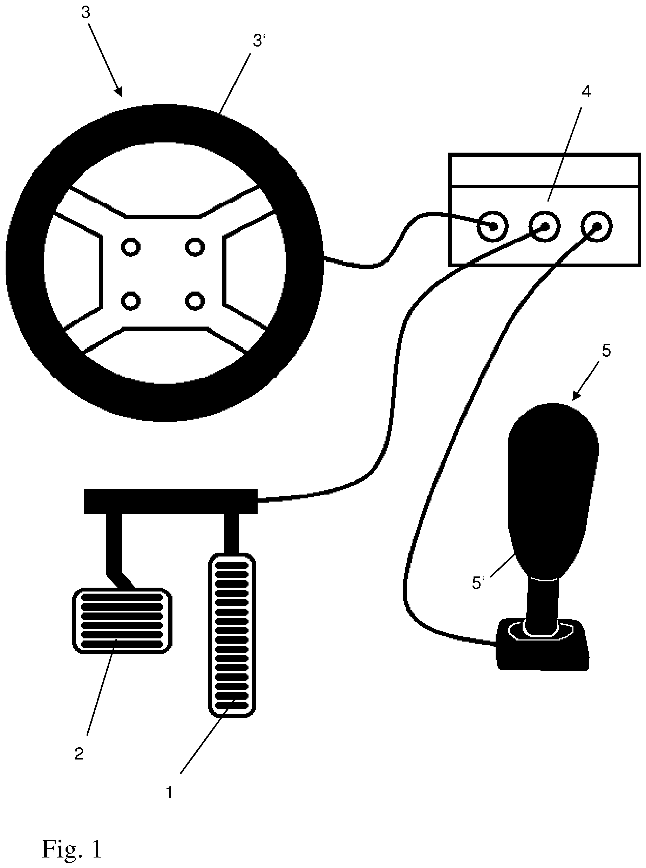

Die aus Fig. 1 ersichtliche, erfindungsgemäße Vorrichtung dient zum wahlweisen Betreiben eines Kraftfahrzeugs in einem benutzergesteuerten oder in einem zumindest teilweise automatischen Fahrbetriebsmodus. In üblicher Weise sind als Eingabeschnittstellen für den benutzergesteuerten Fahrbetriebsmodus ein bei Fahrzeugen mit Verbrennungsmotor auch als "Gaspedal" bezeichnetes Beschleunigungspedal 1 und ein Bremspedal 2 zur Längsführung des Fahrzeugs und ein Lenkrad 3 zur Querführung des Fahrzeugs vorgesehen. Weiterhin ist eine Einrichtung 4 zum Wechseln zwischen den Fahrbetriebsmodi und zum Überwachen der Aufmerksamkeit des Fahrers während eines automatischen Fahrbetriebsmodus vorhanden. Erfindungsgemäß umfasst die Vorrichtung ein weiteres, dem automatischen Fahrbetriebsmodus zugeordnetes, handbetätigbares Bedienelement 5. Dieses Bedienelement 5 ist gemäß dem vorliegenden Ausführungsbeispiel durch einen "Drive-Stick" in der Mittelkonsole des Fahrzeugs gebildet und somit an einem Ort platziert, an dem gewöhnlich ein Gangwahlschalter für das Fahrzeug angebracht ist. Funktional ist der Drive-Stick in der bekannten Art eines Joy-Stick ausgebildet, so dass mit diesem in sinnfälliger Weise durch Bewegungen parallel oder senkrecht zur Fahrzeuglängsachse Befehle sowohl zur Längs- als auch zur Querführung des Fahrzeugs an dieses übermittelt werden können. Zur Kooperation mit der Einrichtung 4 zum Wechseln zwischen den Fahrbetriebsmodi und zum Überwachen der Aufmerksamkeit des Fahrers während eines automatischen Fahrbetriebsmodus ist der Drive-Stick 5 mit einem Berührungssensor 5' versehen, der als kapazitiver Sensor direkt unter der Außenhaut der Drive-Sticks angeordnet ist, und dessen Ausgangssignal dieser Einrichtung 4 zugeführt wird. In der hier dargestellten Ausführungsform der erfindungsgemäßen Vorrichtung ist das Lenkrad 3 des Fahrzeugs ebenfalls mit einem in gleicher Weise in dieses integrierten Berührungssensor 3' versehen, dessen Ausgangssignal ebenfalls der Einrichtung 4 zum Wechseln zwischen den Fahrbetriebsmodi und zum Überwachen der Aufmerksamkeit des Fahrers zugeführt wird.

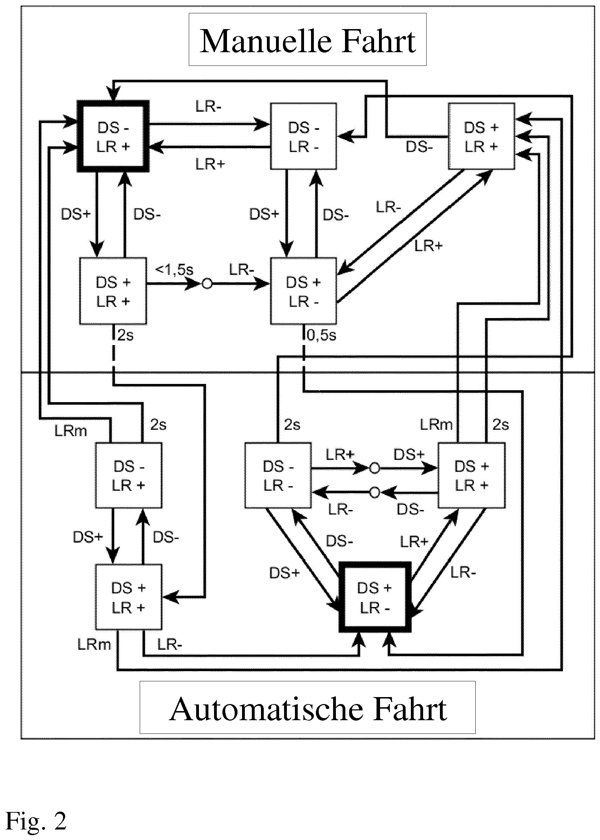

Eine Ausgestaltung des erfindungsgemäßen Verfahrens wird im Folgenden anhand des in Fig. 2 gezeigten Ablaufdiagramms erläutert. Die Bedeutung der in dem Diagramm verwendeten Kürzel ergibt sich aus folgender Tabelle:

| | |
|---|---|
| DS+ | : DriveStick angefasst |
| DS- | : DriveStick losgelassen |
| LR+ | : Lenkrad angefasst |
| LR- | : Lenkrad losgelassen |
| LRm | : Lenkrad manuell gedreht |
| x s | : x Sekunden in diesem Zustand |

Für das Umschalten zwischen einem benutzergesteuerten und einem zumindest teilweise automatischen Fahrbetriebsmodus, im Folgenden auch als automatisches und manuelles Fahren angesprochen, wird über Sensoren detektiert, ob der Fahrer den Drive-Stick und/oder das Lenkrad berührt. Bei den Sensoren, die in diesem Falle als Berührungssensoren direkt in dem Drive-Stick bzw. in dem Lenkrad vorhanden sind, handelt es sich beispielsweise um kapazitiv arbeitende Sensoren. Alternativ ist aber auch der Einsatz z.B. optischer oder piezoelektrischer Sensoren möglich.

Das grundlegende Prinzip der dem Verfahren zugrunde liegenden Bedienphilosophie und Sicherheitsstrategie lautet: So lange der Fahrer den DriveStick in der Hand hält (DS+), fährt das Fahrzeug automatisch, lässt der Fahrer den DriveStick los (DS-) oder fasst er das Lenkrad (LR+) an, so muss er das Fahrzeug manuell steuern. Durch das permanente Berühren des Drive-Stick bei automatischer Fahrt bleibt der Fahrer "in the Loop" und bestätigt damit jederzeit, dass er das automatisch fahrende Fahrzeug überwacht, und dass sich die automatischen Systeme korrekt verhalten.

Es gibt somit zwei Standard-Situationen:
1. Der Fahrer steuert das Fahrzeug manuell. Er hat die Hände am Lenkrad, der Drive-Stick wird nicht berührt (DS- / LR+).
2. Der Fahrer hat den Drive-Stick in der Hand, er berührt das Lenkrad nicht (DS+ / LR-). Das Fahrzeug fährt automatisch.

Ausgehend von diesen beiden Zuständen, die als die stabilen Zustände des Systems in Fig. 2 durch fette Umrandungen hervorgehoben sind, kann durch Loslassen / Berühren von Drive-Stick und Lenkrad zwischen manueller und automatischer Fahrt gewechselt werden. Zusätzlich kann der Fahrer durch aktiven Eingriff in das Lenkrad (LRm), also durch Ausführen einer Lenkbewegung während der automatischen Fahrt, die automatischen Systeme jederzeit überstimmen und damit sofort in den manuellen Fahrbetriebsmodus zurückkehren.

Der Übergang von manueller zu automatischer Fahrt geschieht dabei wie folgt: Der Fahrer hat mindestens eine Hand am Lenkrad (LR+), der DriveStick ist nicht berührt (DS-). Durch zusätzliches Berühren des DriveStick (DS+) für eine Dauer von mindestens 2 Sekunden wird die automatische Fahrt aktiviert. Wird bereits vorher zusätzlich das Lenkrad losgelassen (LR-), so wird die automatische Fahrt bereits nach 0,5 Sekunden aktiviert. Solange der Drive-Stick nicht wieder losgelassen oder das Lenkrad nach einem Loslassen wieder berührt wird, bleibt der automatische Fahrzustand erhalten.

Der umgekehrte Übergang von automatischer zu manueller Fahrt geschieht folgendermaßen: Der Fahrer hat den Drive-Stick in der Hand (DS+), das Lenkrad berührt er nicht (LR-). Durch Loslassen des Drive-Sticks (DS-) oder durch Anfassen des Lenkrades (LR-), jeweils für mindestens 2 Sekunden, schalten sich die automatischen Systeme ab, der Fahrer muss das Fahrzeug wieder manuell steuern. Falls der Fahrer das Lenkrad im manuellen Fahrbetrieb nicht berührt, erfolgt ein entsprechender Warnhinweis durch eine dazu vorgesehene Anzeigeeinrichtung.

Ein automatischer Fahrbetriebsmodus wird auch unter den gerade beschriebenen Bedingungen selbstverständlich nur dann aktiviert, wenn für die aktuell vorliegende Fahrsituation entsprechende Routinen vorgesehen sind. Beispiele für solche Fahrsituationen sind etwa Autobahnfahrt, Kolonnenfahrt oder ein Einparkvorgang.

## Patentansprüche

1. Vorrichtung zum wahlweisen Betreiben eines Kraftfahrzeugs in einem benutzergesteuerten oder in einem zumindest teilweise automatischen Fahrbetriebsmodus, wobei als Eingabeschnittstellen für den benutzergesteuerten Fahrbetriebsmodus ein Beschleunigungs- (1) und ein Bremspedal (2) zur Längsführung und ein Lenkrad (3) zur Querführung des Fahrzeugs vorgesehen sind, und wobei eine Einrichtung (4) zum Wechseln zwischen den Fahrbetriebsmodi und zum Überwachen der Aufmerksamkeit des Fahrers während eines automatischen Fahrbetriebsmodus vorhanden ist, wobei ein weiteres, dem automatischen Fahrbetriebsmodus zugeordnetes, handbetätigbares Bedienelement (5) vorhanden ist, das zur Eingabe von Befehlen sowohl zur Längs- als auch zur Querführung des Fahrzeugs dient, **dadurch gekennzeichnet, dass** das Bedienelement (5) mit zumindest einem Berührungssensor (5') versehen ist, dessen Ausgangssignal der Einrichtung (4) zum Wechseln zwischen den Fahrbetriebsmodi und zum Überwachen der Aufmerksamkeit des Fahrers zugeordnet ist, und dass das Lenkrad (3) des Fahrzeugs ebenfalls mit zumindest einem Berührungssensor (3') versehen ist, dessen Ausgangssignal der Einrichtung (4) zum Wechseln zwischen den Fahrbetriebsmodi und zum Überwachen der Aufmerksamkeit des Fahrers zugeordnet ist.

2. Vorrichtung nach Anspruch 1, **dadurch gekennzeichnet, dass** das dem automatischen Fahrbetriebsmodus zugeordnete, handbetätigbare Bedienelement (5) in der Mittelkonsole des Fahrzeugs angeordnet ist.

3. Vorrichtung nach Anspruch 1 oder 2, **dadurch gekennzeichnet, dass** das dem automatischen Fahrbetriebsmodus zugeordnete, handbetätigbare Bedienelement (5) funktional in der Art eines Joy-Stick ausgebildet ist.

4. Verfahren zum wahlweisen Betreiben eines Kraftfahrzeugs in einem benutzergesteuerten oder in einem zumindest teilweise automatischen Fahrbetriebsmodus, wobei im benutzergesteuerten Fahrbetriebsmodus die Längsführung des Fahrzeugs durch ein Beschleunigungs- (1) und ein Bremspedal (2) und die Querführung durch ein Lenkrad (3) erfolgen, und wobei während eines automatischen Fahrbetriebsmodus Aufmerksamkeit des Fahrers durch eine dazu bestimmte Einrichtung (4) überwacht wird, wobei in dem automatischen Fahrbetriebsmodus Befehle sowohl zur Längs- als auch zur Querführung des Fahrzeugs über ein diesem Fahrbetriebsmodus zugeordnetes, handbetätigbares Bedienelement (5) eingegeben werden, **dadurch gekennzeichnet, dass** die Überwachung der Aufmerksamkeit des Fahrers durch Auswertung des Ausgangssignals eines dem handbetätigbaren Bedienelement (5) zugeordneten Berührungssensors (5') erfolgt, dass das Ausgangssignal des dem handbetätigbaren Bedienelement (5) zugeordneten Berührungssensors (5') auch zum Wechseln zwischen den Fahrbetriebsmodi ausgewertet wird, und dass das Ausgangssignal eines dem Lenkrad (3) zugeordneten Berührungssensors (3') ebenfalls zum Wechseln zwischen den Fahrbetriebsmodi ausgewertet wird.

5. Verfahren nach Anspruch 4, **dadurch gekennzeichnet, dass** ein entsprechender Warnhinweis durch eine dazu vorgesehene Anzeigeeinrichtung gegeben wird, falls in der aktuellen Fahrsituation kein automatischer Fahrbetrieb möglich ist.

## Claims

1. Apparatus for operating a motor vehicle selectively in a user-controlled or in an at least partially automatic driving operation mode, whereby an accelerator pedal (1) and a brake pedal (2) for the longitudinal control and a steering wheel (3) for the lateral control are provided as input interfaces for the user-controlled driving operation mode, and whereby a device (4) is provided for switching between the driving operation mode and for monitoring the alertness of the driver while in automatic driving operation mode, whereby a further manually operable control element (5) is provided which is assigned to the automatic driving operation mode and serves for inputting commands as well as for the longitudinal and lateral control of the vehicle, **characterised in that** the control element (5) is provided with at least one contact sensor (5') whose output signal is assigned to the device (4) for the purpose of switching between the driving operation modes and for monitoring the driver's alertness, and that the steering wheel (3) of the vehicle is likewise provided with at least one contact sensor (3') whose output signal is assigned to the device (4) for the purpose of switching between the driving operation modes and for monitoring the driver's alertness.

2. Apparatus according to Claim 1, **characterised in that** the manually operable control element (5) assigned to the automatic driving operation mode is located in the centre console of the vehicle.

3. Apparatus according to Claim 1 or Claim 2, **characterised in that** the manually operable control element (5) assigned to the automatic driving operation mode is functionally designed in the fashion of a joystick.

4. Process for operating a motor vehicle selectively in a user-controlled or in an at least partially automatic driving operation mode whereby, in the user-controlled driving operation mode, the longitudinal control of the vehicle is carried out by way of an accelerator pedal (1) and a brake pedal (2), and the lateral control by a steering wheel (3) and whereby, while in the automatic driving operation mode, the alertness of the driver is monitored by a device (4) designated for this purpose whereby, in the automatic driving operation mode, commands for the longitudinal and for the lateral control of the vehicle are input via a manually operable control element (5) assigned to this driving operation mode, **characterised in that** the monitoring of the driver's alertness is carried out by evaluating the output signal of a contact sensor (5') assigned to the manually operable control element (5), that the output signal of the contact sensor (5') assigned to the manually operable control element (5) is also evaluated for switching between the driving operation modes, and that the output signal of a contact sensor (3') assigned to the steering wheel (3) is likewise evaluated for the purpose of switching between the driving operation modes.

5. Process according to Claim 4, **characterised in that** whenever no automatic driving operation mode is possible in the current driving situation, an corresponding warning is given by a display device provided for this purpose.

## Revendications

1. Dispositif de conduite sélective d'un véhicule automobile dans un mode de conduite commandé par l'utilisateur ou au moins partiellement automatique, sachant que, pour le mode de conduite commandé par l'utilisateur, sont prévus, comme interface d'introduction, une pédale d'accélération (1) et une pédale de freinage (2) pour le guidage longitudinal et un volant (3) pour le guidage transversal du véhicule, et sachant qu' une installation (4) est présente pour la sélection entre les modes de conduite du véhicule et pour la surveillance de l'attention du conducteur pendant une conduite en mode automatique, sachant qu'est prévu un autre élément de commande (5)'actionnable manuellement, qui, associé au mode de conduite automatique, sert à l'introduction d'ordres aussi bien pour le guidage longitudinal que pour le guidage transversal du véhicule automobile,
**caractérisé en ce que**
l'élément de commande (5) est pourvu d'au moins un capteur tactile (5'), dont le signal de sortie est associé à l'installation (4) de sélection des modes de conduite et de surveillance de l'attention du conducteur, et que le volant (3) du véhicule automobile est également pourvu d'au moins un capteur tactile (3'), dont le signal de sortie est associé à l'installation de sélection entre les modes de conduite et de surveillance de l'attention du conducteur (4).

2. Dispositif selon la revendication 1, **caractérisé en ce que** l'élément de commande actionnable manuellement (5), associé au mode de conduite automatique, est disposé dans la console centrale du véhicule automobile.

3. Dispositif selon revendication 1 ou 2, **caractérisé en ce que** l'élément de commande actionnable manuellement (5), associé au mode de conduite automatique, est fonctionnellement réalisé dans le genre d'un Joiy-stick.

4. Procédé de conduite sélective d'un véhicule automobile dans un mode de conduite commandé par l'utilisateur ou au moins partiellement automatique, sachant que, dans le mode de conduite commandé par l'utilisateur, le guidage longitudinal du véhicule automobile est effectué au moyen d'une pédale d'accélération (1) et d'une pédale de freinage (2) et le guidage transversale est effectué au moyen d'un volant (3), et sachant que, pendant la conduite en mode automatique, l'attention du conducteur est surveillée par une installation (4) prévue dans ce but, sachant que dans le mode de conduite automatique, des ordres, concernant aussi bien le guidage longitudinal que le guidage transversal, sont donnés par l'intermédiaire d'un élément de commande actionnable manuellement (5), associé à ce mode de conduite, **caractérisé en ce que** la surveillance de l'attention du conducteur est effectuée par évaluation du signal de sortie d'un capteur tactile (5'), associé à l'élément de commande actionnable manuellement (5), que le signal de sortie du capteur tactile (5'), associé à l'élément de commande actionnable manuellement (5), est aussi évalué pour la sélection entre les mode de conduite, et que le signal de sortie d'un capteur tactile (3'), associé au volant (3), est également exploité pour la sélection entre les modes de conduite.

5. Procédé selon la revendication 4, **caractérisé en ce qu'**un avertissement conforme est donné par un dispositif d'affichage, prévu dans ce but, quand une conduite en mode automatique n'est pas possible dans la situation de circulation actuelle.
